(19) Europäisches Patentamt
European Patent Office
Office européen des brevets

(11) **EP 3 350 619 B1**

(12) **FASCICULE DE BREVET EUROPEEN**

(45) Date de publication et mention
de la délivrance du brevet:
**04.12.2019 Bulletin 2019/49**

(51) Int Cl.:
***G01S 13/84*** *(2006.01)*    ***G01S 13/82*** *(2006.01)*
***G07C 9/00*** *(2006.01)*

(21) Numéro de dépôt: **16769963.6**

(22) Date de dépôt: **16.09.2016**

(86) Numéro de dépôt international:
**PCT/EP2016/072061**

(87) Numéro de publication internationale:
**WO 2017/046386 (23.03.2017 Gazette 2017/12)**

(54) **PROCÉDÉ DE DÉTERMINATION D'UNE DISTANCE ENTRE UN VÉHICULE ET UN IDENTIFIANT**

*VERFAHREN ZUR BESTIMMUNG EINES ABSTANDS ZWISCHEN EINEM FAHRZEUG UND EINEM IDENTIFIKATOR*

METHOD FOR DETERMINING A DISTANCE BETWEEN A VEHICLE AND AN IDENTIFIER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.09.2015 FR 1558833**

(43) Date de publication de la demande:
**25.07.2018 Bulletin 2018/30**

(73) Titulaire: **Valeo Comfort and Driving Assistance
94046 Créteil Cedex (FR)**

(72) Inventeur: **LECONTE, Eric
94046 Créteil Cedex (FR)**

(74) Mandataire: **Delplanque, Arnaud
VALEO Comfort and Driving Assistance
76, rue Auguste Perret
Z.I. Europarc
94046 Créteil Cedex (FR)**

(56) Documents cités:
**US-A1- 2002 094 786    US-A1- 2004 000 986**

**Description**

**DOMAINE TECHNIQUE DE L'INVENTION**

Le domaine technique de l'invention est, d'une façon générale, les systèmes d'accès et de démarrage mains libres de véhicules. L'invention concerne plus particulièrement un procédé de détermination d'une distance séparant un véhicule d'un identifiant mains libres permettant d'accéder au véhicule et/ou de démarrer le véhicule.

**ETAT DE LA TECHNIQUE**

Les systèmes d'accès et de démarrage dit « mains libres » ou « hands free », permettant le verrouillage et le déverrouillage des portes d'un véhicule, ainsi que le démarrage de son moteur sans l'utilisation d'une clef traditionnelle, sont aujourd'hui largement répandus sur le marché.

De manière classique, lorsqu'un utilisateur souhaitant déverrouiller une porte d'un véhicule touche un capteur capacitif ou est détecté par un capteur infrarouge situé au niveau de la poignée de porte, un calculateur central du véhicule déclenche l'émission d'un signal d'interrogation basse fréquence (entre 20 et 150kHz) par une antenne basse fréquence du véhicule. Alternativement, l'antenne basse fréquence peut envoyer périodiquement de tels signaux d'interrogation basse fréquence (on parle de « poling »). Si un identifiant (qui prend classiquement et la forme d'une clef ou d'une carte électronique, voire d'un smartphone disposant d'une application adéquate activée), à proximité du véhicule, capte un signal d'interrogation, il répond en envoyant un code de déverrouillage au calculateur central par signal radio. Un récepteur radio du véhicule réceptionne alors le signal radio : si le code de verrouillage est reconnu par le calculateur central, alors ce dernier commande le déverrouillage de la porte.

Le procédé est sensiblement le même lorsque l'utilisateur souhaite démarrer le véhicule et appuie sur un interrupteur situé dans l'habitacle : dans ce cas, le moteur n'est démarré par le calculateur central que si un code de démarrage envoyé par l'identifiant est reconnu par le calculateur central.

Pour renforcer la sécurité des systèmes d'accès et de démarrage mains libres, il est souhaitable que des conditions additionnelles soient remplies avant de déclencher un verrouillage, un déverrouillage ou un démarrage. Il est notamment souhaitable que la localisation de l'identifiant soit en cohérence avec l'action à effectuer, par exemple :

- Pour un déverrouillage, l'identifiant doit être localisé dans un périmètre maximal, par exemple de 2 mètres, autour du véhicule
- Pour un verrouillage, aucun identifiant ne doit être localisé à l'intérieur de l'habitacle
- Pour un démarrage, l'identifiant doit être localisé à l'intérieur de l'habitacle.

Ainsi, une mesure de distance fiable entre l'identifiant et le véhicule est nécessaire.

On connait l'utilisation de la technologie IR-UWB (Impulse Radio Ultra-Wideband) pour déterminer la distance véhicule-identifiant, par l'intermédiaire de mesures de temps de propagation de signaux (« time of flight » selon la terminologie anglo-saxonne). Selon cette méthode, un premier émetteur-récepteur UWB situé au niveau du véhicule envoie une impulsion par signal radio à un temps t0, impulsion qui est reçue par un deuxième émetteur-récepteur UWB appartenant à l'identifiant. Or, à cause des réfractions et réflexions subies sur son trajet par l'onde envoyée, le deuxième émetteur-récepteur ne reçoit pas uniquement l'impulsion directe, mais également des signaux provenant des trajets multiples de l'impulsion. Le signal total reçu est communément appelé signature. Le deuxième émetteur-récepteur date l'amplitude maximale de la signature, qui correspond a priori au temps de réception t1 de l'impulsion directe. Puis le deuxième émetteur-récepteur renvoie au premier émetteur-récepteur une impulsion à un temps t2, qui est reçue et datée (t3) de la même manière par le premier émetteur-récepteur. Le deuxième émetteur-récepteur envoie également au premier émetteur-récepteur l'information t2 - t1.

La distance est alors déterminée par le premier émetteur-récepteur selon les formules suivantes :

$$t3 - t0 = (t1 - t0) + (t2 - t1) + (t3 - t2)$$

$$\text{Or } t1 - t0 = t3 - t2 = d/c,$$

où d est la distance séparant le véhicule de l'identifiant, et c la vitesse de propagation du signal entre le véhicule et l'identifiant.

Ainsi,

$$t3 - t0 = 2*(t1 - t0) + (t2{-}t1) = 2d/c + (t2 - t1)$$

D'où :

$$d = (c/2)*[(t3 - t0) - (t2 - t1)].$$

Puisque t3 - t0 et t2 - t1 sont connus par le premier émetteur-récepteur, la distance d est déterminable par le premier émetteur-récepteur.

Cette méthode présente toutefois des inconvénients. Une consommation d'énergie élevée est nécessaire au niveau des récepteurs, ces derniers devant réceptionner des signaux très faibles noyés dans du bruit. De plus, la puissance nécessaire pour générer les impulsions est très importante. L'autonomie de l'identifiant est donc impactée.

Le document US 2004/000986 divulgue un procédé de mesure d'une distance séparant un véhicule et un identifiant, qui utilise un train de N signaux sinusoïdaux d'amplitudes identiques et de fréquences respectives $f_p$ régulièrement espacées.

Le document US 2002/094786 divulgue un procédé de mesure d'une distance séparant des objets sans fil utilisant des signaux à fréquences discrètes.

## DESCRIPTION GENERALE DE L'INVENTION

L'objet de l'invention est donc de proposer un procédé de mesure de distance entre un véhicule et un identifiant, permettant de s'affranchir de l'émission d'impulsions.

Pour ce faire, l'invention propose un procédé de mesure d'une distance séparant un véhicule et un identifiant pour accéder et démarrer le véhicule, le véhicule et l'identifiant étant synchronisés, le procédé comprenant :

- une transmission, du véhicule à l'identifiant, d'un premier train de N premiers signaux sinusoïdaux d'amplitudes identiques et de fréquences respectives $f_p$ régulièrement espacées, $p\in[1;N]$
- une mesure de phases et d'amplitudes, par l'identifiant, de signaux d'un premier train image reçu correspondant au premier train altéré par la transmission
- une transmission des phases et des amplitudes mesurées, de l'identifiant au véhicule
- une transmission, de l'identifiant au véhicule, d'un deuxième train identique au premier train
- une construction d'un spectre fréquentiel du premier train image et d'un deuxième train image correspondant au deuxième train altéré par la transmission
- une transformation de Fourier inverse, permettant d'obtenir une signature temporelle
- une détermination d'un temps intermédiaire associé à un maximum de la signature temporelle
- un calcul de la distance à partir du temps intermédiaire.

Outre les caractéristiques qui viennent d'être évoquées dans le paragraphe précédent, le procédé de mesure selon l'invention peut présenter une ou plusieurs caractéristiques complémentaires parmi les suivantes, considérées individuellement ou selon toutes les combinaisons techniquement possibles.

Dans un mode de réalisation non limitatif, les fréquences $f_p$ sont telles que N=80, f1=2400 MHz et pour tout p compris entre 1 et 79, $f_{p+1}{-}f_p$=1 MHz. La gamme de fréquences associée correspond au Bluetooth. Ainsi, l'émetteur peut être intégré dans une puce Bluetooth. On note que si l'émetteur appartient à un identifiant pour commander à distance un véhicule, ou que l'identifiant se présente sous la forme d'un smartphone disposant d'une application adaptée, alors il comporte nativement une puce Bluetooth.

Dans un mode de réalisation non limitatif, le calcul comporte une détermination d'un lobe maximal de la signature temporelle, et d'une détermination d'un temps de commencement dudit lobe maximal.

Dans un mode de réalisation non limitatif, la transformée de Fourier inverse est réalisée par Transformée de Fourier Inverse Rapide (Invert Fast Fourier Transform, ou IFFT, selon la terminologie anglo-saxonne). Pour cela, des données sont rajoutées aux données mesurées pour obtenir un spectre fréquentiel à N fréquences où N est une puissance de 2($N=2^k$, k étant un nombre entier).

Dans un mode de réalisation non limitatif, le procédé comporte un ajout d'échantillons aux trains image mesurés, pour obtenir un nombre de fréquences du spectre fréquentiel supérieur au nombre de fréquences mesurées. Ceci permet d'obtenir une signature temporelle plus précise.

Dans un mode de réalisation non limitatif, le procédé de mesure comporte une étape préalable de synchronisation de l'identifiant et du véhicule, notamment par un protocole Bluetooth.

L'invention et ses différentes applications seront mieux comprises à la lecture de la description qui suit et à l'examen des figures qui l'accompagnent.

## BREVE DESCRIPTION DES FIGURES

Les figures ne sont présentées qu'à titre indicatif et nullement limitatif de l'invention. Les figures montrent :

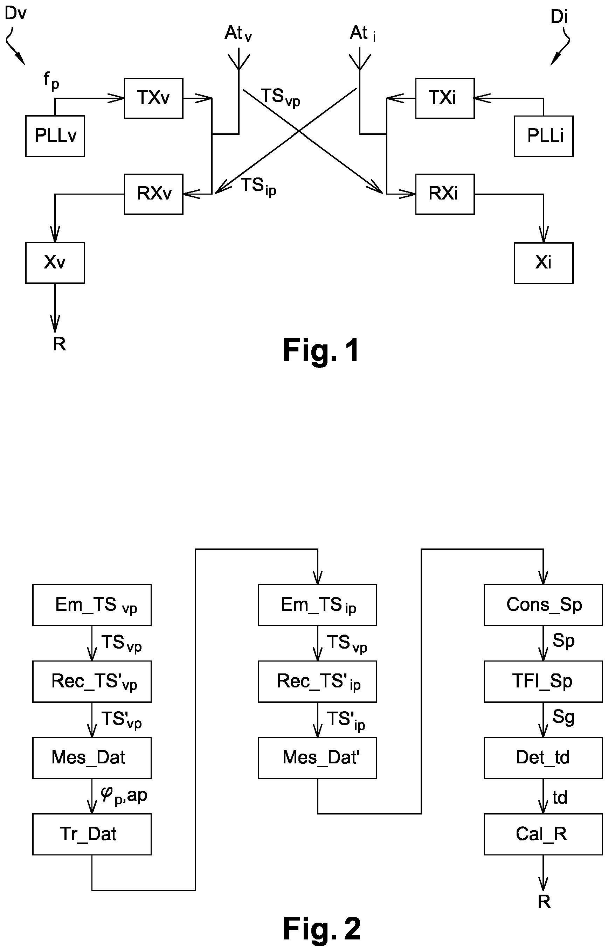

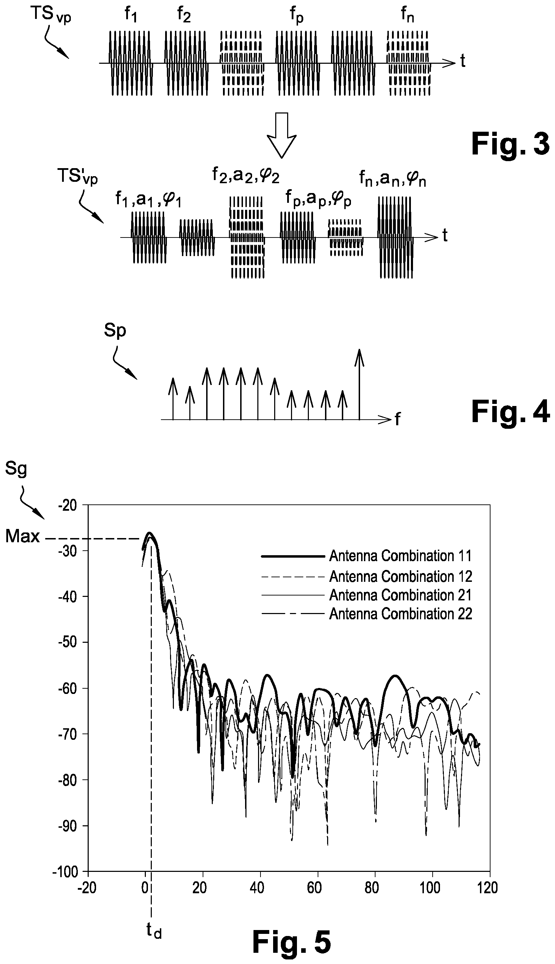

- A la figure 1, deux dispositifs d'émission-réception appartenant respectivement à un véhicule et un identifiant dont on souhaite connaître l'éloignement, les dispositifs étant adaptés à la mise en œuvre d'un procédé selon un mode de réalisation de l'invention ;
- A la figure 2, un diagramme en bloc représentant des étapes du procédé ;
- A la figure 3, des signaux échangés entre les dispositifs d'émission-réception lors des étapes du procédé.

## DESCRIPTION DETAILLEE D'AU MOINS UN MODE DE REALISATION DE L'INVENTION

Sauf précision contraire, un même élément apparaissant sur des figures différentes présente une référence unique.

Le procédé décrit ci-après permet de calculer une distance R entre un véhicule V et un identifiant I dits mains libres, ledit identifiant I permettant de commander selon un principe « mains libres » l'accès ou le démarrage du véhicule V. L'identifiant I est par exemple une carte ou une clef électronique, ou un smartphone disposant d'une application adaptée.

Le véhicule V comporte un premier dispositif d'émission-réception Dv, et l'identifiant I comporte un deuxième dispositif d'émission-réception Di. Le premier dispositif d'émission-réception Dv et le deuxième dispositif d'émission-réception Di étant similaires, une description générale est présentée ci-après.

En référence à la figure 1, un dispositif d'émission-réception Dp, l'indice p étant indifféremment v ou i, comporte :

- un émetteur TXp de signaux radio (de fréquence au moins égale à 1GHz)
- un récepteur RXp de signaux radio (de fréquence au moins égale à 1GHz)
- une antenne Atp à laquelle sont connectés l'émetteur TXp et le récepteur RXp
- une boucle à verrouillage de phase PLLp pour fournir des signaux de différentes fréquences à l'émetteur TXp
- un calculateur Xp pour effectuer des calculs à partir de signaux reçus par le récepteur RXp.

On note qu'un smartphone dispose nativement de tous les composants du dispositif d'émission-réception Dp décrit. Dans un mode de réalisation préféré, l'identifiant I est donc un smartphone disposant d'une application adaptée à l'accès et au démarrage mains libres du véhicule. Les divers composants du dispositif d'émission-réception Di sont avantageusement déclenchés et contrôlés par l'application installée sur le smartphone.

Le procédé selon l'invention est mis en œuvre par le premier dispositif d'émission-réception Dv et le deuxième dispositif d'émission-réception Di. On note que le premier dispositif d'émission-réception Dv et le deuxième dispositif d'émission-réception Di ont été préalablement synchronisés entre eux, par exemple via un protocole Bluetooth Low Energy (on note que qu'un smartphone dispose nativement d'une puce Bluetooth). En référence à la figure 2, le procédé METH comporte les étapes suivantes.

- une transmission $Em\_TS_{vp}$, de l'émetteur TXv du véhicule V au récepteur RXi de l'identifiant I, d'un premier train $TS_{vp}$ de N premiers signaux sinusoïdaux $S_{vp}$ de phases et d'amplitudes identiques, et de fréquences respectives $f_p$, $p \in [1;N]$. Le premier train $TS_{vp}$ est représenté à la figure 3. Avantageusement, les fréquences $f_p$ sont telles que N=80, $f_1$=2,4 GHz, $f_{80}$=2,480 GHz et pour tout p entre 1 et 79, $f_{p+1}-f_p$ = 1MHz. Ces fréquences correspondent en effet aux canaux Bluetooth Low Energy. On note que le premier train $TS_{vp}$ est généré par la boucle à verrouillage de phase PLLv du véhicule V.

- une réception $Rec\_TS_{vp}'$, par le récepteur RXi de l'identifiant I, d'un premier train image $TS_{vp}'$ correspondant au premier train $TS_{vp}$ altéré par la transmission $Em\_TS_{vp}$. Le premier train image $TS_{vp}'$ est représenté à la figure 3. Le premier train image $TS_{vp}'$ est constitué de N signaux sinusoïdaux images $S_{vp}'$ respectivement de phases $\varphi_p$, d'amplitudes $a_p$ et de fréquences $f_p$, $p \in [1;N]$. Si les fréquences $f_p$ des premiers signaux $S_{vp}$ ne sont pas altérées par la transmission, leur amplitude et leur phase le sont. En effet, les phénomènes de réflexions et réfractions subis par les signaux entre l'émetteur TXv du véhicule V et le récepteur RXi de l'identifiant I déphasent et modifient l'amplitude des signaux.

- une mesure $Mes\_Dat$, par le récepteur RXi de l'identifiant I, de phases $\varphi_p$ et d'amplitudes $a_p$ des signaux $S_{vp}'$ du

premier train image TS$_{vp}$'.

- une transmission Tr_Dat sous forme de données des amplitudes a$_p$ et des phases φ$_p$ mesurées par l'identifiant I lors de l'étape précédente. Ces données sont par exemple transmises en utilisant un protocole Bluetooth Low Energy.

- une transmission Em_TS$_{ip}$, de l'émetteur TXi de l'identifiant I au récepteur RXv du véhicule V, d'un deuxième train TS$_{ip}$ identique au premier train TS$_{vp}$. On note que le deuxième train TS$_{ip}$ est généré par la boucle à verrouillage de phase PLLi de l'identifiant.

- une réception Rec_TS$_{ip}$', par le récepteur RXv du véhicule V, d'un deuxième train image TS$_{ip}$' correspondant au deuxième train TS$_{ip}$ altéré par la transmission Em_TS$_{ip}$.

- une mesure, par le récepteur RXv du véhicule V, de phases et d'amplitudes des signaux du deuxième train image TS$_{ip}$'

- A un temps t$_4$,

 o une construction Cons_Sp d'un spectre Sp fréquentiel constitué par le premier train image TS$_{vp}$' et le deuxième train image TS$_{ip}$', par détection des raies spectrales du premier TS$_{vp}$' et du deuxième train image TS$_{ip}$'.
 o une transformation de Fourier inverse TFI_Sp permettant d'obtenir une signature temporelle Sg. La signature temporelle Sg est équivalente à celle qui aurait été obtenue si une impulsion avait été transmise en lieu et place des premier et deuxième trains TS$_{vp}$ et TS$_{ip}$.
 o une détermination Det_t$_d$ d'un temps intermédiaire t$_d$ associé à un maximum de la signature temporelle Sg.

- un calcul Cal_R, par le calculateur Xv du véhicule V, de la distance R à partir du temps intermédiaire t$_d$, selon la formule suivante : $R = \frac{c}{2} \cdot t_d$ où c est la vitesse de propagation des signaux échangés entre le véhicule V et l'identifiant I.

A partir de la distance R calculée et en fonction d'une fonction spécifique demandée (ouverture d'une porte, fermeture d'une porte, démarrage du véhicule, par exemple), le calculateur Xv du véhicule V est en mesure de déterminer si la fonction doit être réalisée ou non.

Alternativement, le temps intermédiaire t$_d$ pourrait être déterminé par recherche de la valeur du début du lobe maximal de la signature temporelle. Le début du lobe peut être déterminé par différence entre la valeur maximale et une constante (par exemple 20 dB). Alternativment, le début du lobe est déterminé par différence entre la valeur maximale et une valeur dépendant de la valeur moyenne des lobes les plus éloignés du lobe maximal de la signature temporelle.

Naturellement, les étapes du procédé pourraient, alternativement, être réalisées dans un ordre, techniquement possible, autre que celui présenté ci-avant.

**Revendications**

1. Procédé de mesure (METH) d'une distance (R) séparant un véhicule (V) et un identifiant (I) pour accéder et démarrer le véhicule (V), le véhicule (V) et l'identifiant (I) étant synchronisés, le procédé (METH) comprenant :

 - une transmission (Em_TS$_{vp}$), du véhicule (V) à l'identifiant (I), d'un premiertrain (TS$_{vp}$) de N premiers signaux sinusoïdaux (S$_{vp}$) d'amplitudes identiques et de fréquences respectives f$_p$ régulièrement espacées, p∈[1;N]
 - une mesure (Mes_Dat) de phases (φ$_p$) et d'amplitudes (a$_p$), par l'identifiant (I), de signaux d'un premier train image (TS$_{vp}$') reçu correspondant au premier train (TS$_{vp}$) altéré par la transmission
 - une transmission (Tr_Dat) des phases (φ$_p$) et des amplitudes (a$_p$) mesurées, de l'identifiant (I) au véhicule (V)
 - une transmission (Em_TS$_{ip}$), de l'identifiant (I) au véhicule (V), d'un deuxième train (TS$_{ip}$) identique au premier train (TS$_{vp}$)
 - une construction (Cons_Sp) d'un spectre fréquentiel (Sp) constitué du premier train image (TS$_{vp}$') et d'un deuxième train image (TS$_{ip}$'), ledit deuxième train image (TS$_{ip}$') correspondant au deuxième train (TS$_{ip}$) altéré par la transmission
 - une transformation de Fourier inverse (TFI_Sp), permettant d'obtenir une signature temporelle (Sg)
 - une détermination (Det_t$_d$) d'un temps intermédiaire (t$_d$) associé à un maximum de la signature temporelle (Sg)
 - un calcul (Cal_R) de la distance (R) à partir du temps intermédiaire (t$_d$)

**2.** Procédé de mesure (METH) selon la revendication 1, **caractérisé en ce que** les fréquences $f_p$ sont telles que N=80, f1=2400 MHz et pour tout p compris entre 1 et 79, $f_{p+1}-f_p$=1 MHz.

**3.** Procédé de mesure (METH) selon l'une des revendications précédentes, **caractérisé en ce que** le calcul comporte une détermination d'un lobe maximal de la signature temporelle, et d'une détermination d'un temps de commencement dudit lobe maximal.

**4.** Procédé de mesure (METH) selon l'une des revendications précédentes, **caractérisé en ce que** la transformation de Fourier inverse (TFI_Sp) est réalisée par Transformée de Fourier Inverse Rapide.

**5.** Procédé de mesure (METH) selon la revendication précédente, **caractérisé en ce qu'**il comporte un ajout d'échantillons aux trains image ($TS_{vp}$', $TS_{ip}$') mesurés.

**6.** Procédé de mesure (METH) selon l'une des revendications 3 à 5, **caractérisé en ce qu'**il comporte une étape préalable de synchronisation de l'identifiant (I) et du véhicule (V), notamment par un protocole Bluetooth.


**Patentansprüche**

**1.** Verfahren zur Messung (METH) eines Abstands (R), welcher ein Fahrzeug (V) und eine Identifikationsvorrichtung (I) für den Zugang zum Fahrzeug (V) und zum Starten desselben trennt, wobei das Fahrzeug (V) und die Identifikationsvorrichtung (I) synchronisiert sind, wobei das Verfahren (METH) umfasst:

- eine Übertragung (Em_$TS_{vp}$), vom Fahrzeug (V) zur Identifikationsvorrichtung (I), einer ersten Folge ($TS_{vp}$) von N ersten Sinussignalen ($S_{vp}$) mit identischen Amplituden und mit gleichmäßig beabstandeten jeweiligen Frequenzen $f_p$, $p \in$ [1;N],
- eine Messung (Mes_Dat), durch die Identifikationsvorrichtung (I), von Phasen ($\varphi_p$) und von Amplituden ($a_p$) von Signalen einer ersten empfangenen Bild-Folge ($TS_{vp}$'), die der durch die Übertragung veränderten ersten Folge ($TS_{vp}$) entspricht,
- eine Übertragung (Tr_Dat) der gemessenen Phasen ($\varphi_p$) und Amplituden ($a_p$) von der Identifikationsvorrichtung (I) zum Fahrzeug (V),
- eine Übertragung (Em_$TS_{ip}$), von der Identifikationsvorrichtung (I) zum Fahrzeug (V), einer zweiten Folge ($TS_{ip}$), die mit der ersten Folge ($TS_{vp}$) identisch ist,
- eine Konstruktion (Cons_Sp) eines Frequenzspektrums (Sp), das aus der ersten Bild-Folge ($TS_{vp}$') und einer zweiten Bild-Folge ($TS_{ip}$') besteht, wobei die zweite Bild-Folge ($TS_{ip}$') der durch die Übertragung veränderten zweiten Folge ($TS_{ip}$) entspricht,
- eine inverse Fourier-Transformation (TFI_Sp), die es ermöglicht, eine Zeitsignatur (Sg) zu erhalten,
- eine Bestimmung (Det_$t_d$) einer Zwischenzeit ($t_d$), die einem Maximum der Zeitsignatur (Sg) zugeordnet ist,
- eine Berechnung (Cal_R) des Abstands (R) aus der Zwischenzeit ($t_d$).

**2.** Verfahren zur Messung (METH) nach Anspruch 1, **dadurch gekennzeichnet, dass** die Frequenzen $f_p$ so beschaffen sind, dass N = 80, f1 = 2400 MHz ist und für jedes p zwischen 1 und 79 gilt $f_{p+1} - f_p$= 1 MHz.

**3.** Verfahren zur Messung (METH) nach einem der vorhergehenden Ansprüche, **dadurch gekennzeichnet, dass** die Berechnung eine Bestimmung einer maximalen Keule der Zeitsignatur und eine Bestimmung einer Anfangszeit dieser maximalen Keule beinhaltet.

**4.** Verfahren zur Messung (METH) nach einem der vorhergehenden Ansprüche, **dadurch gekennzeichnet, dass** die inverse Fourier-Transformation (TFI_Sp) durch inverse schnelle Fourier-Transformation realisiert wird.

**5.** Verfahren zur Messung (METH) nach dem vorhergehenden Anspruch, **dadurch gekennzeichnet, dass** es eine Hinzufügung von Samples zu den gemessenen Bild-Folgen ($TS_{vp}$', $TS_{ip}$') umfasst.

**6.** Verfahren zur Messung (METH) nach einem der Ansprüche 3 bis 5, **dadurch gekennzeichnet, dass** es einen vorausgehenden Schritt der Synchronisation der Identifikationsvorrichtung (I) und des Fahrzeugs (V), insbesondere durch ein Bluetooth-Protokoll, umfasst.

**Claims**

1. Method (METH) for measuring a distance (R) separating a vehicle (V) and an identifier (I) for accessing and starting the vehicle (V), the vehicle (V) and the identifier (I) being synchronized, the method (METH) comprising:

   - transmission (Em_TS$_{vp}$), from the vehicle (V) to the identifier (I), of a first train (TS$_{vp}$) of N first sinusoidal signals (S$_{vp}$) with identical amplitudes and with regularly spaced respective frequencies f$_p$, p$\in$[1;N]
   - measurement (Mes_Dat) of phases ($\varphi_p$) and of amplitudes (a$_p$), by the identifier (I), of signals of a first received image train (TS$_{vp}$') corresponding to the first train (TS$_{vp}$) altered by the transmission
   - transmission (Tr_Dat) of the measured phases ($\varphi_p$) and amplitudes (a$_p$), from the identifier (I) to the vehicle (V)
   - transmission (Em_TS$_{ip}$), from the identifier (I) to the vehicle (V), of a second train (TS$_{ip}$) identical to the first train (TS$_{vp}$)
   - construction (Cons_Sp) of a frequency spectrum (Sp) consisting of the first image train (TS$_{vp}$') and of a second image train (TS$_{ip}$'), said second image train (TS$_{ip}$') corresponding to the second train (TS$_{ip}$) altered by the transmission
   - an inverse Fourier transform (TFI_Sp), making it possible to obtain a temporal signature (Sg)
   - determination (Det_t$_d$) of an intermediate time (t$_d$) associated with a maximum of the temporal signature (Sg)
   - calculation (Cal_R) of the distance (R) on the basis of the intermediate time (t$_d$),

2. Measurement method (METH) according to Claim 1, **characterized in that** the frequencies f$_p$ are such that N=80, fl=2400 MHz and, for all values of p between 1 and 79, f$_{p+1}$-f$_p$=1 MHz.

3. Measurement method (METH) according to either of the preceding claims, **characterized in that** the calculation includes determining a maximum lobe of the temporal signature, and determining a start time of said maximum lobe.

4. Measurement method (METH) according to one of the preceding claims, **characterized in that** the inverse Fourier transform (TFI_Sp) is performed by inverse fast Fourier transform.

5. Measurement method (METH) according to the preceding claim, **characterized in that** it includes adding samples to the measured image trains (TS$_{vp}$', TS$_{ip}$').

6. Measurement method (METH) according to one of Claims 3 to 5, **characterized in that** it includes a prior step of synchronizing the identifier (I) and the vehicle (V), in particular using a Bluetooth protocol.

EP 3 350 619 B1

Fig. 1

Fig. 2

8

Fig. 3

Fig. 4

Fig. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2004000986 A

- US 2002094786 A